# EUROPEAN PATENT SPECIFICATION

(11) **EP 4 299 969 B1**
(45) Date of publication and mention of the grant of the patent: **22.10.2025**
(21) Application number: 23180109.3
(22) Date of filing: 19.06.2023
(51) Int. Cl.: F16N 25/00, F16N 27/00, F16N 7/00, F16N 7/34, F16N 13/16, B05B 9/04, B65D 77/06, F04B 23/04, F04B 9/125

(54) **WETTING FLUID APPLICATOR AND METHOD OF APPLYING WETTING FLUID TO A PRESSURE RELIEF VALVE**
BENETZUNGSFLÜSSIGKEITSAPPLIKATOR UND VERFAHREN ZUM AUFTRAGEN VON BENETZUNGSFLÜSSIGKEIT AUF EIN DRUCKENTLASTUNGSVENTIL
APPLICATEUR DE FLUIDE MOUILLANT ET PROCÉDÉ D'APPLICATION DE FLUIDE MOUILLANT À UNE SOUPAPE DE SURPRESSION

(30) Priority: 30.06.2022 US 202263357599 P
(43) Date of publication of application: 03.01.2024
(73) Proprietor: Plitek, LLC, Prospect Heights, IL 60070 (US)
(72) Inventor: HOFFMAN, Karl K., Arlington Heights (US); NICHOLS, Gregory C., Crystal Lake (US)
(74) Representative: Caspary, Karsten

(56) References cited:
- DE-A1- 19 926 719
- US-B2- 8 522 926

## Description

### FIELD

This invention relates generally to one-way pressure relief valves affixed to packaging for products such as roasted coffee, and more particularly, to an improved apparatus and method for application of wetting fluid to such pressure relief valves to ensure a more effective closure of the valves.

### BACKGROUND

One-way pressure relief valves, such as PLI-VALV^{®} brand pressure relief valves available from Plitek^{®} L.L.C. of Des Plaines, Illinois, are applied to packaging for products, such as coffee and other products that outgas. Such valves are referred to herein interchangeably as a one-way pressure relief valves or, simply, by the term valves. The product package to which each valve is attached may be more rigid, as in the example of a canister lid, or more flexible, as in the example of a pillow bag package. Typically, a single pressure relief valve is applied to each package.

### Valve Background

One-way pressure relief valves of the types described herein may include a laminate of thin plastic and/or foil materials. Base and cover layers with a dry strap layer in between may be provided. The base layer may include one or more vent openings therethrough. Gas from within the package is permitted to move through the vent and between the dry strap and base, to an edge of the valve, and out to the atmosphere. An adhesive on a first side of the base layer adheres the valve to the product package. The one-way pressure relief valves are typically supplied to the product packager on a non-tearing release liner web which may be of materials such as polyester. The adhesive on the first side of the base layer removably adheres each valve to the liner until the valves are removed immediately prior to the application to the product package. The adhesive then provides for permanent securement of each valve to the product package. Such one-way pressure relief valves vent unwanted gases out of the package and also prevent atmospheric gases from entering back into the package where such gases might oxidize or otherwise damage the product. One advantage of such valves is that they allow coffee to be packed immediately after roasting to preserve freshness. Gases generated from the fresh coffee are vented out from the package through the one-way pressure relief valve. Elimination of any need to "degas" the coffee for 12-24 hours before packaging saves time and money, while ensuring that customers receive the highest quality coffee.

Typically, but not always, one-way pressure relief valves of the types described herein are applied in conjunction with the product packaging process by means of a packaging machine. For example, a valve may be applied to a flexible pillow bag package shortly before or after the package is filled with the roasted coffee product. The packaging process may permit intermittent application of the valves to the package, or may require that the valves be applied in a continuous operation.

### Applicator Background

A valve applicator system may be used to automate the process of applying valves of the type described above to product packaging. By way of example only, a valve applicator unit may be a component of a form/fill/seal packaging system. As is known, form/fill/seal packaging systems are used to form a package, load product into the package and to close the package after loading. The valve applicator system may be purposed to apply pressure-relief valves to the packaging material in an intermittent or continuous process.

A valve applicator system may generally include a base unit, a set of guide rollers, electronic and pneumatic components, a wetting fluid applicator unit, and a valve applicator unit.

The base unit provides for advancing and indexing a release liner web carrying the pressure relief valves. The base unit may include an unwinder, from which a wound web of release liner with valves affixed thereto is unwound, and a rewinder to take up the release liner web after the valves have been applied to the packaging. The base unit may further include electrical components, pneumatic components, control components, and a drive motor. Guide rollers may be used to orient the running direction of the release liner (generally vertical or horizontal), as needed to accommodate the packaging equipment in conjunction with which the pressure relief valve applying system is being used. Electronic equipment may include sensors and stepper motors, and the pneumatic components generally include a vacuum generator, regulators and filters for feeding the vacuum and pneumatic systems, as well as valves for operating pneumatic cylinders.

A wetting fluid applicator unit may be a component which functions in concert with the valve applicator unit. The wetting fluid applicator unit provides wetting fluid, such as a food grade silicone oil, to wet the interface of the base layer and facing dry strap layer internal to the valve so as to improve the sealing effect of the valve. The wetting fluid applicator may include a spray head for delivery of wetting fluid to the valve. Wetting fluid may be supplied under pressure to the spray head by, for example, electro/mechanical gear-driven pumps or by air-driven Nordson tank systems. The wetting fluid flows under high pressure to the spray head which then applies a small volumetric amount of wetting fluid within the valve. By way of example only, an amount of about 0.2 µg of wetting fluid may be delivered to each valve from the spray head.

The valve applicator unit may also include a punch, piercing needle, or some other device to make an opening in the packaging, a peeler bar assembly assisting in the removal of the pressure relief valve from the release liner, and a valve applicator head for attaching the pressure relief valve to the packaging in operating register with the opening made by the punch, needle or other device. An example of an excellent valve applicator unit is disclosed in U.S. Patent No. 8,522,926, which is owned by the present applicant.

The valve applicator system and the valve applicator unit of the system may be required to apply 180 valves per minute to the packages. 180 valves/minute is considered to represent a high throughput. It may be desirable in certain applications for the valve applicator system to have an even greater throughput. Operation of the valve applicator unit is demanding on the pump, supply lines, fittings, and other components used to deliver wetting fluid to the spray head.

### Unsolved Problems

A problem with gear-driven pump systems is that higher viscosity wetting fluids can cause these types of systems to malfunction. A higher viscosity wetting fluid may be in the range of from about 100 centipoise (cP) to about 400 centipoise (cP). Product packagers seeking to use valve applicators of the types described herein prefer to use higher viscosity wetting fluids because such fluids improve the performance of the valves in terms of preventing backflow of ambient air through the valve and into the package. One such higher viscosity wetting fluid is food grade silicone oil blended with microscopic graphite particles. The graphite particles can significantly increase the viscosity of the blended wetting fluid to over 300 cP.

A problem with Nordson systems is that the entire valve application process must be shut down in order to inspect the amount of wetting fluid in the Nordson reservoir or to replenish the reservoir with wetting fluid.

The foregoing and other problems with wetting fluid applicator systems using gear-driven pump fluid applicator systems 10 and Nordson fluid applicator systems 110 can be understood with respect to the simplified schematic diagrams of FIGS. 1-3 described below. Wetting fluid applicator systems 10 and 110 are intended for use with pressure-relief valves 11 of the type illustrated in FIGS. 6 and 7 and are purposed to apply wetting fluid 13 to such valves 11.

### Gear-Driven Wetting Fluid Applicators

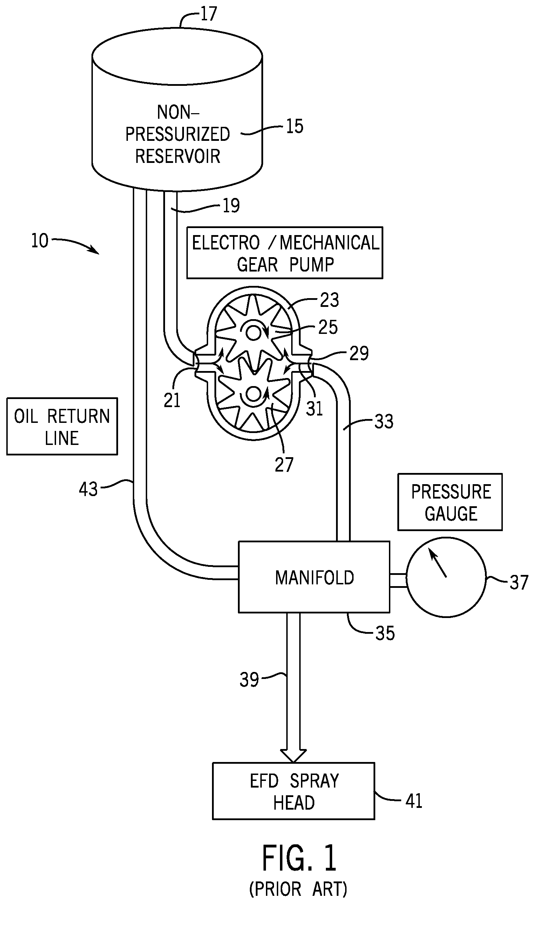

Referring first to FIG. 1, the gear-driven wetting fluid applicator system 10 illustrated therein includes a non-pressurized wetting fluid reservoir 15 with a removable lid 17. Reservoir 15 is provided to hold wetting fluid 13. Lid 13 may be removed to add wetting fluid 13, or for a human operator to check the level of wetting fluid 13 in reservoir 15. Because reservoir 15 is non-pressurized, lid 17 may be removed during operation of system 10 for the refill of the wetting fluid 13 or to inspect the reservoir 15 to determine the amount of wetting fluid 13 therein.

Supply line 19 receives wetting fluid 13 from reservoir 15. Wetting fluid 13 from supply line 19 is delivered to inlet 21 of electro-mechanical pump 23. Pump 23 includes impellers 25, 27 driven by an electrically-powered DC motor (not shown) which generate a pressure which displaces wetting fluid 13 out through pump outlet 29 in the direction of arrow 31 through supply line 33 and into manifold 35. A pressure gauge 37 may indicate the pressure of wetting fluid 13 within manifold 35. Fluid pressure produced by pump 23 may be in the range of about 30 psi to about 50 psi. Pressure-driven wetting fluid 13 is directed from manifold 35 through supply line 39 to spray head 41. Spray head 41 is provided to apply a mist or spray of wetting fluid into each valve 11. An example of a spray head 41 which may be implemented is a solenoid-controlled EFD 781S series model 781S-SS-14 spray or atomizing valve available from Nordson EFD of East Providence, Rhode Island. Excess wetting fluid 13 may be recirculated back to wetting fluid reservoir 15 from manifold 35 through supply line 43.

A particular failure point of gear-driven systems 10 of the type described above is the pump 23. High viscosity wetting fluids 13 are more difficult to displace and this places increased loads on pump 23 causing premature pump 23 failure. Higher loads on gear-driven systems 10 also place greater demands on supply lines 19 and 33, fittings joining such supply lines 19, 33 to other components, and on other components such as manifold 35, and spray head 41.

### Nordson-Type Wetting Fluid Applicators

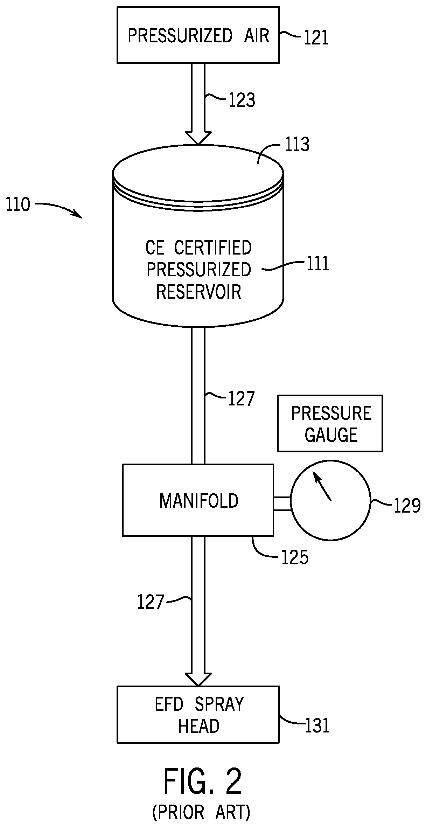

Referring next to FIGS. 2-3, the Nordson pump fluid applicator system 110 illustrated therein includes a pressurized wetting fluid reservoir 111 with a removable lid 113. Pressurized reservoir 111 is provided to hold wetting fluid 13 of the type used with gear-driven pump fluid applicator system 10. Lid 113 may be held in place on reservoir 111 by compression fittings, each indicated by reference number 115 for convenience. Compression fittings 115 hold lid 113 on reservoir 111 responsive to the elevated pressure within reservoir 111. After depressurization of reservoir 111, lid 113 may be removed by loosening compression fittings 115. Lid 113 must be removed to add wetting fluid 13 and to check the level of wetting fluid in reservoir 111. Vent 117 may be provided to release high-pressure air from within reservoir 111. Sidewall 119 of reservoir 111 and lid 113 are each of opaque material preventing an operator from seeing the amount of wetting fluid 13 in reservoir 111 through lid 113 and sidewall 119.

A source of high-pressure air 121, which may be provided by a standard shop air compressor pump, delivers pressurized air to reservoir 111 though air supply line 123. Supplied air pressure may be in the range of from about 30 psi to about 100 psi. Air pressure displaces wetting fluid 13 from reservoir 111 and into manifold 125 via fluid delivery line 127. Pressure gauge 129 indicates the pressure of wetting fluid 13 within manifold 125. Pressure-driven wetting fluid 13 is directed from manifold 125 through fluid supply line 127 to spray head 131. Spray head 131 may be a solenoid-controlled EFD 781 S series model 781S-SS-14 spray or atomizing valve available from Nordson EFD of East Providence, Rhode Island. Spray head 131 applies a mist or drop of wetting fluid 13 onto each pressure-relief valve 11. The Nordson system 110 is a direct delivery system which does not recirculate wetting fluid as does gear-driven system 10.

An important disadvantage of Nordson systems 110 is that such systems must be shut down in order for a human operator to loosen compression fittings 115 and to remove lid 113 to refill pressurized reservoir 111 or to check the level of wetting fluid 13 within reservoir 111. Shut down is required because pressure within reservoir 111 must first be released through vent 117 to equalize pressure within reservoir 111 with ambient air pressure before removing lid 113. Any unnecessary shut down of Nordson system 110 means that the entire packaging line must be shut down and that can increase inefficiency and cost to the packager. A further disadvantage is that the opaque lid 113 and sidewall 119 of reservoir 111 prevent a human operator from seeing the level of wetting fluid 13 in reservoir 111 without first removing lid 113 to look inside reservoir 111. Again, any need to remove lid 113 requires that the Nordson system 110 first be shut down for purposes of bleeding air pressure from reservoir 111 through vent 117 and this process requires shut down of the packaging line.

DE 19926719 A1 discloses a device for continuously conveying paints into a paint-carrying ring line system, which does not subject the paint to any harmful shear stress caused by piston pumps, with a compressed gas source, with two stationary material pressure containers, wherein the ring line system has a feed line leading from the material pressure containers to extraction points and a return line leading from the extraction points back to the material pressure containers, so that the paint can be conveyed in a circuit independently of extraction, wherein the material pressure containers can be supplied with compressed gas alternately or at least at times simultaneously by the compressed gas source or a compressed gas filling device cooperating with it, so that above the paint liquid level inside the material pressure containers a compressed gas cushion can be formed in order to displace paint from the material pressure vessel into the supply line of the ring line system, and with a venting device at each material pressure vessel for relaxing the compressed gas cushion in order to be able to refill the respective material pressure vessel.

It would be an improvement in the art to provide a wetting fluid applicator and method of applying wetting fluid to a pressure relief valve that would enable use with high-viscosity wetting fluids, which would minimize or avoid wetting fluid applicator malfunctions caused by use of high-viscosity wetting fluids, which would enable use of non-pressurized wetting fluid reservoirs permitting easier wetting fluid replenishment and visualization of the amount of wetting fluid in the reservoir, which would generally improve the application of wetting fluids to pressure relief valves, and which would improve any packaging process utilizing wetted pressure relief valves.

### SUMMARY

The present invention relates to an improved wetting fluid applicator and method of applying wetting fluid to a pressure relief valve. The improved wetting fluid applicator and application method contribute to improved applicator reliability and to improved operation of the applicator and any packaging process implementing such an applicator.

**In** embodiments, a wetting fluid applicator is purposed to apply wetting fluid to a one-way pressure relief valve before the valve is applied to a package by a packaging machine. A wetting fluid applicator capable of accomplishing this result comprises a controller, a spray head, a non-pressurized reservoir, an air-supply valve, and at least first and second fluid supply circuits which, alternatively, charge the spray head with wetting fluid and replenish the non-charging fluid supply circuit with wetting fluid to thereby have wetting fluid continuously available for application to pressure relief valves.

A controller for controlling the wetting fluid applicator may include a programmable logic controller, or any other suitable type of controller or controllers. The unpressurized wetting fluid reservoir may be in fluid communication with the spray head through the first fluid supply circuit and, alternatively, through the second fluid supply circuit. The controller or controllers operate the air-supply valve to deliver pressurized air to the first fluid supply circuit and, alternatively, to the second fluid supply circuit, and to vent air from the circuit which is not receiving the pressurized air (i.e., the unpressurized circuit).

Each of the fluid supply circuits comprises, a cylinder operatively connected to the air valve and an air-driven piston in the cylinder. Air-driven advancement of a piston provides fluid pressure which charges the spray head with wetting fluid. Retraction of a piston in the other fluid supply circuit, which may occur simultaneously with advancement of the other piston, creates negative fluid pressure in that circuit replenishing the cylinder with wetting fluid for subsequent charging of the spray head. Each piston may be retracted by a spring and the retraction may occur when air pressure to the cylinder is released at the air-supply valve.

Wetting fluid may be supplied to each circuit by a fluid supply line in one-way fluid flow connection from the reservoir to each cylinder. Wetting fluid may be supplied to the spray head from each circuit by a fluid delivery line in one-way fluid flow connection from the cylinder to the spray head. Check valves may be implemented in each fluid supply line to control the direction of wetting fluid flow.

In embodiments, the controller operates the wetting fluid applicator to cause an increase in air pressure in one fluid supply circuit to charge the spray head. The controller may simultaneously cause a release of air pressure in the other fluid supply circuit to replenish that circuit with wetting fluid as its piston retracts creating a negative pressure to thereby induct wetting fluid from the reservoir into such circuit for subsequent charging of spray head with wetting fluid. In such embodiments, one circuit is always ready for charging of the spray head when the other circuit is depleted of wetting fluid.

Other features and embodiments are described in the drawings and detailed description which follows.

### BRIEF DESCRIPTION OF THE DRAWINGS

Examples of wetting fluid applicator units may be understood by reference to the following description taken in conjunction with the accompanying drawings, in which like reference numerals identify like elements throughout the different views. For convenience and brevity, like reference numbers are used for like parts amongst the embodiments. The drawings are not necessarily to scale, emphasis instead being placed upon illustrating the principles of the invention.

In the accompanying drawings:
FIG. 1 is a schematic drawing of a prior art wetting fluid applicator unit with a gear-driven pump provided to displace wetting fluid;
FIG. 2 is a schematic drawing of a prior art Nordson-type wetting fluid applicator with an air-driven pump to displace wetting fluid;

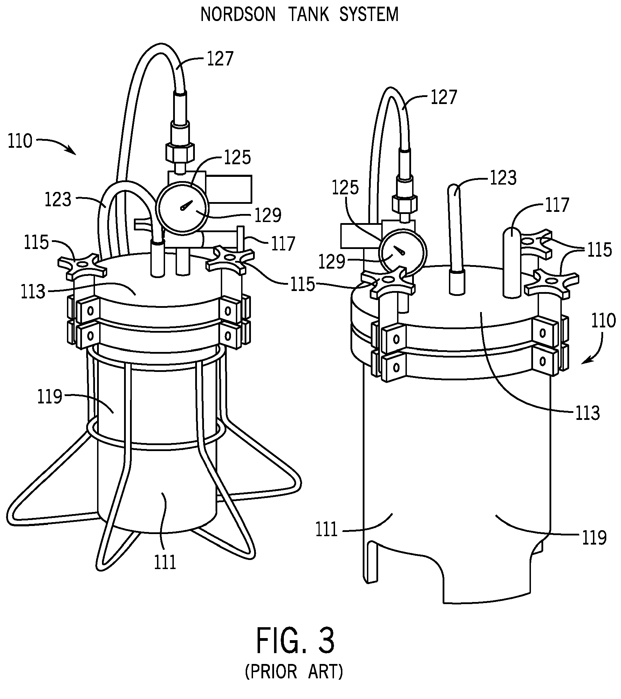

FIG. 3 is two perspective views of a representative Nordson wetting fluid applicator of the type illustrated in FIG. 2;

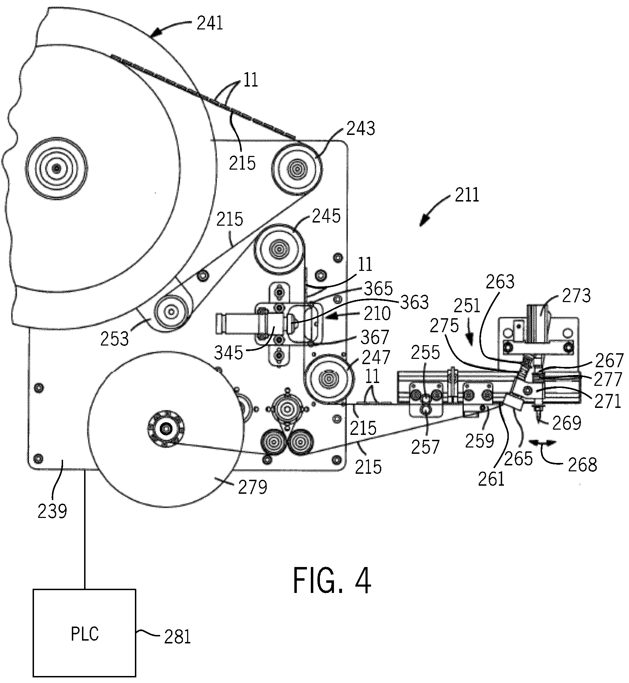

FIG. 4 is a top plan view of a pressure relief valve applicator system, including a base unit, a wetting fluid applicator unit of the present invention, and a valve applicator unit;

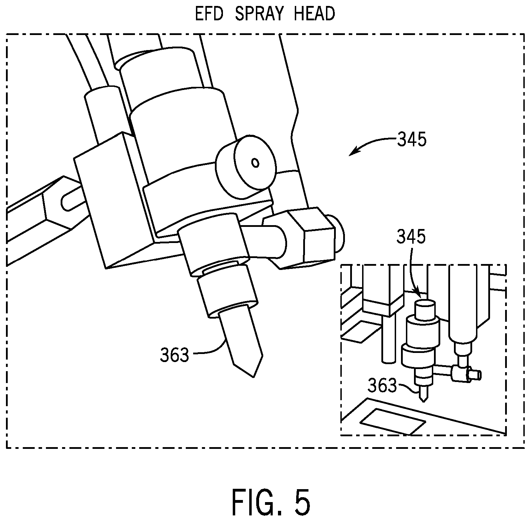

FIG. 5 is a representative EFD spray head capable of being implemented with a wetting fluid applicator unit of the present invention;

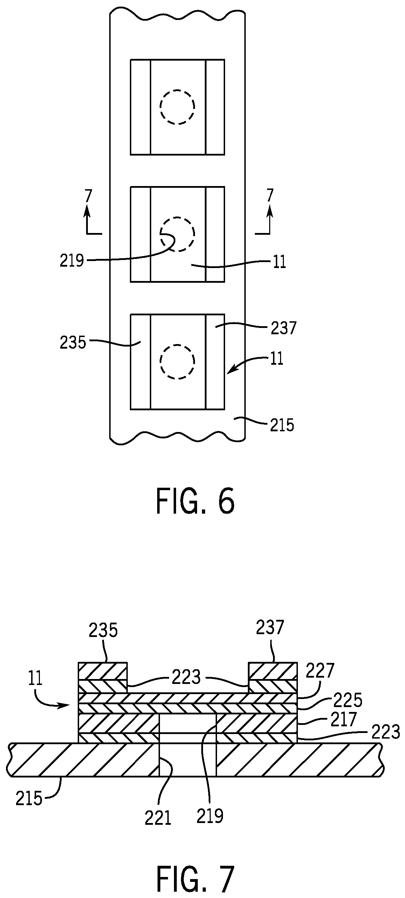

FIG. 6 is a top plan view of a fragment of release liner carrying a series of three exemplary pressure relief valves;
FIG. 7 is a vertical sectional view of a pressure relief valve on a release liner, taken generally along section line 7-7 of FIG. 6;

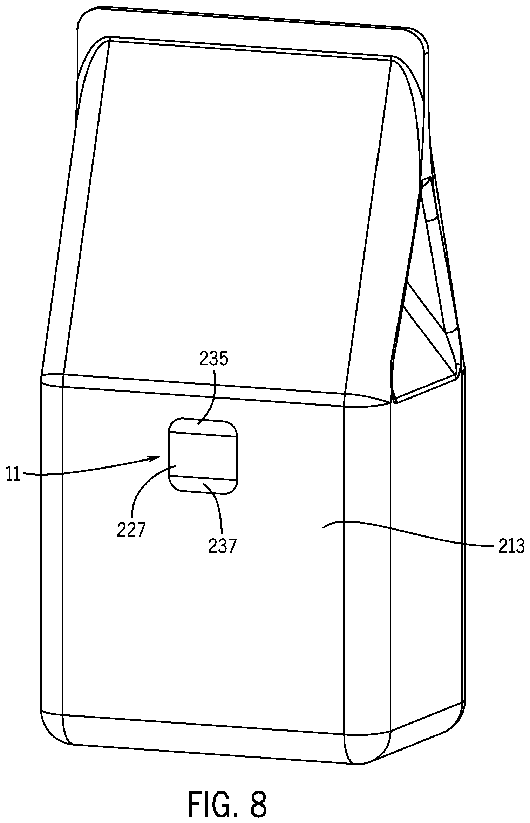

FIG. 8 is a pillow bag package with a one-way pressure relief valve affixed thereto;

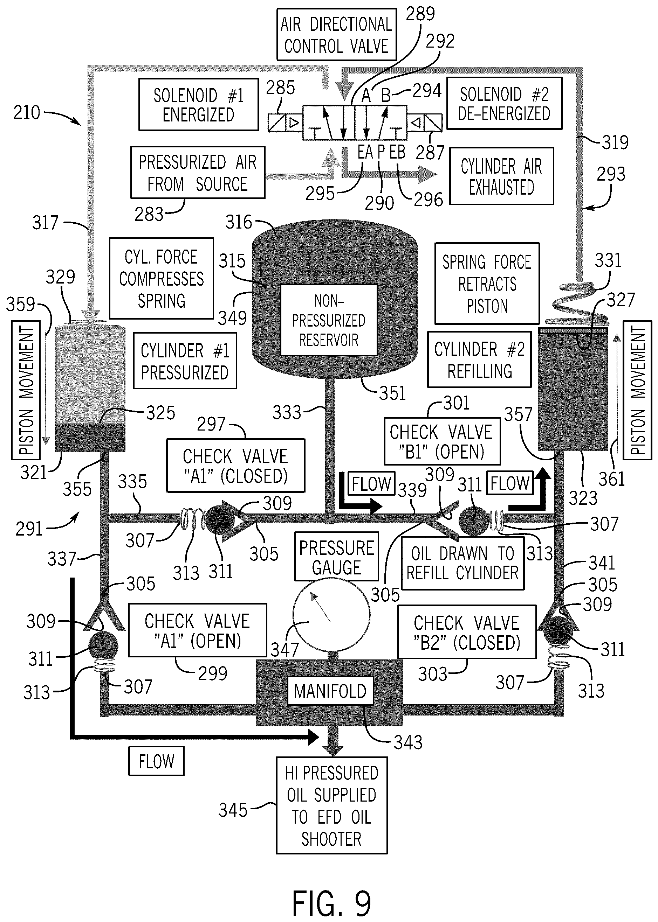

FIG. 9 is a schematic drawing of an embodiment of a wetting fluid applicator unit according to the invention shown delivering wetting fluid from a first circuit while simultaneously replenishing wetting fluid for a second circuit; and

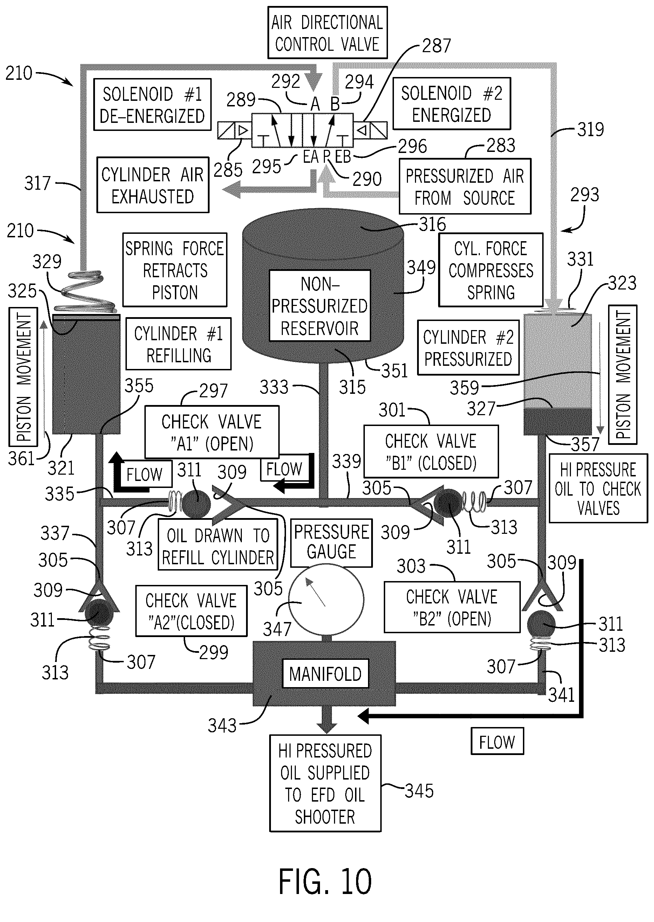

FIG. 10 is a further schematic drawing of the embodiment of the wetting fluid applicator unit according to FIG. 9 shown delivering wetting fluid from the second circuit while simultaneously replenishing wetting fluid for the first circuit.

### DETAILED DESCRIPTION

The present invention relates to the field of systems for applying pressure relief valves to product packaging. A wetting fluid applicator system 210 for applying wetting fluid 13 to one-way pressure relief valves 11 is generally shown in FIGS. 4-10. Applicator system 210 may be a component of a packaging line used to affix pressure relief valves to product packaging 213.

### Introduction and Overview

Referring first to FIGS. 4-5 and FIGS. 9-10, the illustrated wetting fluid applicator system 210 may be a component of a packaging machine 211 shown partially in FIG. 4. Packaging machine 211 may be a vertical form/fill/seal packaging machine 211. Vertical form/fill/seal packaging machines are frequently used for packaging of product, such as roasted coffee, into a package 213. Package 213 loaded by packaging machine 211 may be a pillow bag package of the type illustrated in FIG. 8. It is to be understood that wetting fluid applicator system 210 may be used with any suitable type of packaging machine. For example, wetting fluid applicator system 210 may be used with packaging systems which attach pressure relief valves to lid stock for a canister type packaging system. Wetting fluid applicator system 210 may also be used with any valve application system requiring application of wetting fluid to valve 11.

### Pressure Relief Valves

Details of exemplary pressure relief valves 11 which may be utilized with packaging system 211 and/or with wetting fluid applicator system 210 are shown in the fragmentary and cross-sectional views of FIGS. 6 and 7. As illustrated, valve 11 may be generally flat, or generally planar, in a side elevation view such as illustrated in FIG. 7. Valve 11 may comprises a laminate of layers as described herein.

As illustrated in the examples of FIGS. 4 and 6-7, valves 11 may be provided on a release liner 215. Release liner 215 may carry a series of identical pressure relief valves, each of which is designated with reference number 11 for convenience. Pressure relief valves 11 are removed from release liner 215 by packaging system 211 for application to package 213. Valves 11 may be conveniently spaced apart at regular intervals along liner 215, as for example, at a one-inch spacing between centers.

In the examples, pressure relief valves 11 may each comprise a base layer 217 with a vent 219, which may be generally circular, entirely through base layer 217. Vent 219 is preferably aligned with an opening 221 in liner 215. Indeed, vent 217 and opening 221 in release liner 215 may conveniently be formed in the same operation during the manufacture of the pressure relief valves 11. While one vent 219 in base layer 217 is illustrated, it is to be understood that plural vents may be provided.

An adhesive 223 may be provided on a first side of base layer 217 to secure valve 11 to release liner 215 and to package 213 once removed from release liner 215.

A dry strap 225 may overlie a portion of base layer 217 entirely across vent 219. In embodiments, dry strap 225 may be thinner and more flexible than base layer 217. Dry strap 225 does not have any opening and entirely overlies vent-opening 219. Dry strap 225 provides a moveable closure for vent opening 219.

In the examples, cover layer 227 overlies dry strap 225 and may be secured to base layer 217 at outer ends by an adhesive (not shown), which may be identical to adhesive 223. Such adhesive 223 may also join dry strap to cover layer 227. In the examples, dry strap 225 provides a sort of middle layer membrane between base layer 217 and cover layer 227.

Optionally, a pair of spacers 235, 237 or bumpers, may be affixed to cover layer 227 by an adhesive 223, which may be identical to the adhesive applied to first side of base layer 217 and to adhere cover layer 227 to base layer 217 and to dry strap 225 in the examples. Spacers 235, 237 are useful to distance cover layer 227 and dry strap 225 from objects adjacent a package (e.g., package 213) to which valve 11 is applied, thereby lessening any interference with operation of valve 11 by contact with an adjacent object.

Each pressure relief valve 11 is releasably adhered to liner 215 by adhesive 223 as previously described. Adhesive 223 should have a peel and strength so that valve 11 may be easily separated from release liner 215 yet may be securely affixed to package 213. The exemplary valve 11 illustrated in FIGS. 6 and 7 has a rectangular configuration and may be made of plastic materials for purposes of illustration. The invention is not limited to use with pressure relief valves 11 as illustrated, or any other particular configurations or materials. For example, wetting fluid applicator 210 may be implemented with pressure relief valves of circular or of any other shape, such as circles, pentagons, and polygons. Spacers 235, 237 are optional. Valves 11, which may be used with wetting fluid applicator 210, may have parts of metal foil instead of plastic materials.

Once applied to a package 213, a pressure relief valve 11 allows one way movement of gas out of package 213 and to the surrounding ambient air. Very fine undulating movement of dry strap 225 allows gas bubbles to pass from within package 213, through vent 219 and between facing surfaces of dry strap 225 and base layer 217 to an outer edge of valve 11 and out to the ambient air.

For certain types of pressure-relief valves 11, application of wetting fluid 13 to valve 11 by wetting fluid applicator unit 210 improves sealing and re-sealing of valve 11. Specifically, wetting fluid 13 applied to valve 11 through liner and vent openings 221, 219 plates out between facing surfaces of dry strap 225 and base layer 217 entirely around vent opening 219 wetting those surfaces. The action of the wetting fluid 13 with the dry strap 225 and base layer 217 forms a more complete seal between dry strap 225 and base layer 217 entirely around vent 219 blocking ambient airflow through valve 11 and into package 213. Further, wetting fluid 13 facilitates reformation of the seal between dry strap 225 and base layer 217 after fine undulating movement of dry strap 225 momentarily separates dry strap 225 from base layer 217 to allow gas bubbles to pass therebetween to release gas from package 213.

An example of a pressure relief valve 11 which may include a wetting fluid 13 and be applied to package 213 by a form/fill/seal packaging machine 211 is a PLI-VALV^{®} brand PV-28^{™} pressure relief valve available from Plitek^{®}. The PV-28 valve is a market leader because of its excellent one-way pressure relief characteristics.

### Valve Applicator Unit

FIG. 4 shows a base unit 239 of packaging machine 211, on which there is an unwinder 241 (only a fragmentary portion of which is shown in FIG. 4) containing a roll of release liner 215 carrying a plurality of pressure relief valves 11. Mechanically driven rollers 243, 245, 247 move liner 215 carrying pressure relief valves 11 from unwinder 241, through wetting fluid applicator unit 210, and then to valve applicator unit 251. Tension is maintained on web of release liner 215 by a biased dancer arm 253, which controls tension and absorbs shock as liner 215 carrying valves 11 is unwound by unwinder 241. It will be appreciated by those skilled in the art that pressure relief valves 11 would in practice be carried along the entire length of liner 215 from unwinder 241, through wetting fluid applicator unit 210, and to valve applicator unit 251. However, for convenience of illustration, some of pressure relief valves 11 are not shown along the entire length of liner 215 to valve applicator unit 251 in FIG. 4.

In the examples, valve applicator unit 251 receives pressure relief valves 11 after wetting fluid 13 (e.g., silicone oil with graphite particles) has been applied by wetting fluid applicator 210. Valve applicator unit 251 removes valves 11 one after the other from liner 215 and places each pressure relief valve 11 on a package 213. Such a valve applicator unit 251 is described in greater detail in U.S. Patent No. 7,328,543 which is owned by the present applicant and the contents of said '543 patent are incorporated herein by reference in their entirety. Briefly, valve applicator unit 251 may include a pair of adjacent rollers 255, 257 downstream of wetting fluid applicator unit 210. Rollers 255, 257 guide the web of release liner 215 carrying pressure relief valves 11 subsequent to application of wetting fluid 13 to each successive valve 11. Further downstream of wetting fluid applicator unit 210 is a peeler bar assembly 259. Release liner 215 with the now-wetted pressure relief valves 11 passes across peeler bar assembly 259, and over edge 261, resulting in removal of each pressure relief valve 11 from release liner 215.

A valve applicator shaft 263 may have a valve applicator vacuum head 265 at one end. Vacuum head 265, under operation of a vacuum, releaseably carries a pressure relief valve 11 which has just passed over edge 261 and has been peeled off of release liner 215. A vacuum, provided by a vacuum generator (not shown) of the system, is selectively applied through vacuum lines (not shown) to head 265 to carry and releaseably retain a pressure relief valve 11. Shaft 263 is carried by valve applicator unit 251 for axial movement. Valve applicator unit 251 also has a punch shaft 267 with a punch 269 at one end. Punch 269 may be in the form of a piercing needle capable of forming a hole in package 213 over which valve 11 is applied. Punch shaft 267 is also carried for axial movement. The valve 11 application and process of making a hole with punch 269 may be accomplished while the package material is in a flat web form or on a down tube inside the vertical form/fill/seal machine 211. Valve 11 may be applied to any suitable packaging with examples being the pillow-type package 213 illustrated in FIG. 8 or lid stock for a canister type packaging system.

Applicator shaft 263 and punch shaft 267 are, as shown in FIG. 4, carried by valve applicator unit 251 with their respective axes at an angle to each other, such that vacuum head 265 and punch shaft 267 are further apart than are the respective opposed ends of the shafts. A yoke 271 secures applicator shaft 263 and punch shaft 267 apart at a fixed distance proximate the applicator end of the applicator shaft 263 and the punch end of the punch shaft 267. The fixed subassembly of the applicator shaft 263 and punch shaft 267 are also carried on valve applicator unit 251 for rotational movement, as illustrated by the arrows 268 in FIG. 4, through a limited angle of both clockwise and counterclockwise rotation to define a set pivotal arc of movement. Thus, applicator shaft 263 and punch shaft 267 are selectively rotated or pivoted together through a defined arc denoted by arrows 268, counterclockwise with respect to FIG. 4, in which punch 269 is pivoted out of register with a first position aligned with a package (e.g., package 213) into another position.

Simultaneously and as illustrated in FIG. 4, applicator vacuum head 265 is pivoted from its starting position, (in which it is picking up a wetted pressure relief valve 11) and into register with the vacated first position of punch 269 to apply the wetted pressure relief valve 11 on the package 213 in operating register with the opening that had just been made by punch 269. Reverse, or clockwise, rotation will then pivot punch 269 from the other position back into register with its first position, and applicator vacuum head 265 is simultaneously pivoted out of register with the first position of punch 269, back into the starting position of vacuum head 265 to pick up the next sequential wetted pressure relief valve 11.

A pneumatic cylinder 273 provides a single driver for direct or indirect, selective engagement with an opposed end of punch shaft 267 to drive said punch shaft 267 to the punch-extended position shown in FIG. 4 to enable punch 269 to pierce package 213 and make the opening. Pneumatic cylinder 273 can also drive applicator shaft 263 to drive the applicator shaft 263 to a position extending the applicator vacuum head 265 to affix the wetted pressure relief valve 11 on the package 213 in operating register so that vent 219 in base layer 217 is over the opening punched in the package 213 by punch 269 so that gas can flow out of the package 213, through the package opening made by punch 269, and through valve 11 to the atmosphere. Each of punch shaft 267 and applicator shaft 263 may be provided with a return spring 275 and 277, respectively. When pneumatic cylinder 273 engages punch shaft 267 and moves it axially to its extended position, spring 277 is compressed, as shown is FIG. 4. When pneumatic cylinder 273 is retracted, and punch shaft 267 is pivoted out of register with its first position, spring 277 will return punch shaft 267 back to a retracted position. Applicator shaft 263 and its spring 275, shown uncompressed in FIG. 4, operate in a similar manner with respect to pneumatic cylinder 273 when the applicator shaft is pivoted into register with the first position of punch shaft 267.

Upon setting up valve applicator unit 251, punch 269 needs to be adjusted in accordance with the packaging requirements.

In the example of a form/fill/seal packaging system 211, sensors (not shown) may be provided to detect the presence of, for example, a filled package 213 of coffee, and to emit a signal that starts the cycle of valve 11 application to package 213. Punch 269 starts working to make the required opening in the package 213 and applicator vacuum head 265 picks up a wetted pressure relief valve 11 that has just been peeled and removed from liner 215. Applicator shaft 263 and punch shaft 267 are then pivoted as a unit, moving punch 269 out of register with package 213 and pneumatic cylinder 273, and pivoting applicator vacuum head 265 into the exact same position from which punch 269 has been removed, to apply the pressure relief valve 11 to package 213, utilizing the same adhesive 223 which had releaseably adhered pressure relief valve 11 to liner 215. At that time, pneumatic cylinder 273 engages applicator shaft 263, and the vacuum is removed from head 265, to affix wetted pressure relief valve 11 to the package 213 in operating register with the opening in the package 213 that has just been made by punch 269. Applicator shaft 263 and punch shaft 267 are then returned as a unit to their previous positions, and the cycle repeats. After wetted pressure relief valve 11 is removed from release liner 215 on peeler bar assembly 259, empty release liner 215 is taken up on a rewinder 279 on base unit 239, as shown in FIG. 4.

### Wetting Fluid Applicator Unit

Referring now to FIGS. 4-10, there is shown an embodiment of a wetting fluid applicator unit 210 according to the invention for application of a controlled amount of wetting fluid 13 to a one-way pressure relief valve 11 prior to application of the valve to a package 213. Wetting fluid applicator unit 210 is illustrated schematically in FIGS. 9-10. It is to be understood that wetting fluid applicator unit 210 will be configured as necessary for purposes of delivering wetting fluid 13 to packaging system 211.

Referring to FIG. 4, operation of packaging system 211 may be controlled by a programmable logic controller ("PLC") 281. PLC 281 is illustrated schematically in FIG. 4. PLC 281 may operate all components of packaging machine 211, including wetting fluid applicator system 210 and valve applicator unit 251.

Referring next to FIGS. 9-10, packaging plant lines, such as lines in which the present invention is used, conveniently have a source of compressed air 283 (FIGS. 9-10). Wetting fluid applicator unit 210 may be provided with dry, clean compressed air, in the range of about 70 psi to about 90 psi, from the plant's air source 283. As illustrated in FIGS. 9-10, a pair of solenoids 285, 287 controlled by PLC 281 may control an air-supply valve 289 connected at air inlet port 290 (P) to the plant air source 283 to direct air flow from air source 283 to one of first and second circuits 291, 293 of wetting fluid applicator unit 210 via pressure outlet port 292 (A) to first circuit 291 and outlet port 294 (B) to second circuit 293 as explained herein. Solenoids 285, 287 may also control air-supply valve 289 to allow air to escape to the atmosphere through vent 295 (EA) for first circuit 291, and vent 296 (EB) for second circuit 293 associated with air-supply valve 289, also as described herein. FIGS. 9-10 illustrate a 5/2 pneumatic air-supply valve 289 with 5 ports and two possible states, one state (FIG. 9) in which first circuit 291 is pressurized and second circuit 293 is exhausted and a second state (FIG. 10) in which first circuit 291 is exhausted and second circuit 293 is pressurized.

In the examples, each of first and second circuits 291, 293 may include a pair of check valves 297, 299 or 301, 303. Check valves 297, 299, 301, 303 may each be opened by an increase in fluid pressure or closed when fluid pressure decreases to allow or to block wetting fluid flow 13 responsive to changes in wetting fluid 13 pressure within first and second circuits 291, 293 as described herein. A "check valve" means or refers to a valve that allows wetting fluid 13 to flow in one direction but prevents reverse flow of wetting fluid 13. Each check valve 297, 299, 301, 303 may include an inlet 305 an outlet 307, a seat 309, a ball 311, and a spring 313 which urges ball 311 against seat 309 to close check valve 297, 299, 301, 303. (For convenience and brevity, reference numbers 305-313 are used for each of the different check valves 297, 299, 301, 303.)

Under conditions of increased fluid pressure, wetting fluid 13 enters a check valve 297, 299, 301, 303 at inlet 305 with sufficient force to overcome spring 313 to force ball 311 away from seat 309 so that wetting fluid 13 can flow through check valve 297, 299, 301, 303 and exit through outlet 307. In certain examples, wetting fluid may be driven at between about 70 psi to about 90 psi. When wetting fluid 13 pressure decreases, force applied to ball 311 by spring 313 again urges ball 311 against seat 309 closing check valve 297, 299, 301, 303 to all fluid 13 flow. Each ball 311 provides a type of gate, opening or closing fluid flow through valve 297, 299. 301, 303. It is to be understood that the ball-type check valves 297, 299, 301, 303 shown are merely exemplary and other types of valves may be implemented to accomplish the fluid delivery purposes described herein.

Other components of wetting fluid applicator unit 210 may include a non-pressurized wetting fluid reservoir 315 with lid 316, an air supply and exhaust line 317 for first circuit 291 and an air supply and exhaust line 319 for second circuit 293. Each air supply line 317, 319 is in air-flow connection at one end with air-supply valve 289 and at a second end to a cylinder 321, 323 with a piston 325, 327. High-pressure air flow through a respective air supply/exhaust line 317, 319 advances a piston 325, 327 (i.e., pistons 325, 327 are air-driven in the examples) within a respective cylinder 321, 323 while venting of air through vent 295 or 296 allows for a respective spring 329, 331 to retract a respective piston 325, 327. Alternating advancement of piston 325 or 327 increases fluid pressure (i.e., a positive fluid pressure) to deliver wetting fluid 13 to a spray head 345 from one of first or second circuits 291, 293 while spring 329, 331 powered alternating retraction of a piston 325, 327 creates a vacuum (i.e., a negative pressure) used to replenish wetting fluid 13 within a cylinder 321, 323 as described herein. Use of air pressure to advance pistons 325, 327 provides the operator with the opportunity to avoid use of failure prone gear-driven pumps (e.g., pump 23) to displace wetting fluid 13 within wetting fluid applicator unit 210.

In certain examples, wetting fluid may be driven at between about 70 psi to about 90 psi by operation of each piston 325, 327. Changes in fluid pressure further operate check valves 297, 299, 301, and 303, also as described herein.

Wetting fluid applicator unit 210 may further include a fluid line 333 supplying wetting fluid 13 to the first circuit 291 and, alternatively, to the second circuit 293. Fluid line 333 may be in fluid flow relationship with first circuit 291 through fluid supply line 335, including check valve 297, and fluid delivery line 337 including check valve 299.

Fluid line 333 may be in fluid flow relationship with second circuit 293 through fluid supply line 339, including check valve 301, and fluid delivery line 341 including check valve 303. Wetting fluid 13 from fluid delivery line 337 or 341 may be delivered to manifold 343 in fluid flow relationship with spray head 345 (FIG. 5) controlled by PLC 281. Spray head 345 may be a solenoid-controlled EFD 781S series model 781S-SS-14 spray or atomizing valve available from Nordson EFD of East Providence, Rhode Island. While an EFD head is illustrated, it is to be understood that other types of fluid-delivery technology may be implemented. Examples are spray, dropper and piezo electric delivery heads. These are all examples of types of emitters, valves, or pumps capable of depositing wetting fluid 13 onto pressure relief valve 11. A pressure gauge 347 may be provided to indicate wetting fluid pressure within manifold 343.

Reservoir 315 holds wetting fluid 13 used to supply each of circuits 291, 293 as described herein. Advantageously, reservoir 315 may be unpressurized and at ambient pressure. In the examples, reservoir 315 may be cylindrical in shape including a side wall 349, a bottom wall 351, and removable lid 316. Wetting fluid 13 may be poured into reservoir 315 simply by removing lid 316 with no need for venting of high-pressure air from reservoir 315. The level of wetting fluid 13 in reservoir 315 may be determined by a human operator simply by removing lid 316 and visually looking inside of reservoir 315. A fill line (not shown) may be provided as a visual reference. Because reservoir 315 is not pressurized, addition of wetting fluid 13 or inspection of wetting fluid 13 within reservoir 315 may be accomplished without stopping the wetting fluid applicator system 210 and without stopping the form/fill/seal packaging machine 211 as is required with the Nordson system 110. Reservoir 315 may include a float switch (not shown) or other wetting fluid 13 level sensor to communicate information to PLC 281 to stop operation of the valve applicator unit 251 and packaging machine 211 should wetting fluid 13 be depleted below a preselected level.

Fluid line 333 may be connected at one end to reservoir 315 to receive gravity-fed wetting fluid 13 from reservoir 315 and to both of fluid supply lines 335, 339. For each fluid supply line 335, 339 a respective check valve 297, 301 allows one-way fluid flow alternatively toward a respective cylinder 321 or 323, for the purposes described herein.

In the examples, fluid delivery line 337, 341 is in fluid-flow relationship with a respective fluid supply line 335, 339. Check valve 299, 303 allows one-way fluid flow toward spray head 345. Fluid delivery line 337 is connected in fluid flow relationship at one end to a port 355 of cylinder 321 for first circuit 291 and to spray head 345 (via manifold 343) with check valve 299 therebetween. Fluid delivery line 341 is connected in fluid flow relationship at one end to a port 357 of cylinder 323 for second circuit 293 and to spray head 345 (via manifold 343) with check valve 303 therebetween. Fluid lines 317, 319, 335, 337, 339, 341 may be of any suitable material, such as stainless steel.

### Operation

Referring now to FIGS. 4, 9 and 10, wetting fluid applicator unit 210 functions in the following manner to charge spray head 345 with one circuit 291, or circuit 293 while simultaneously replenishing the other circuit (e.g., circuit 291 or 293) with wetting fluid 13. It will be appreciated that the following description includes both an example of an apparatus and a method of applying wetting fluid to a pressure relief valve by means of such an apparatus.

Initially, a human operator removes lid 316 and pours a desired volumetric amount of wetting fluid 13 into reservoir 315. Any suitable wetting fluid 13 may be used including wetting fluids 13 having a viscosity in the range of about 100 cP to about 400 cP. Examples of wetting fluids 13 may include food grade silicone oil, a graphite impregnated oil, a food grade oil, or a food grade silicone grease. Wetting fluid 13 flows from reservoir 315 by means of gravity into fluid line 333 and to each of fluid supply lines 335, 339 for respective first or second circuits 291, 293.

With reservoir 315 loaded with wetting fluid 13, operation of form/fill/seal packaging machine 211, wetting fluid applicator unit 210, and valve applicator unit 251 can begin. According to FIG. 9, the charging and replenishing process proceeds with PLC 281 initially controlling solenoid 285 or 287 to open air-supply valve 289 to deliver pressurized air at about 70 psi to about 90 psi from air source 283 to one of air supply/exhaust line 317 via charging port 292 (A) or 319 via charging port 294 (B) depending on whether cylinder 321 or 323 of first circuit 291 or second circuit 293 is filled with wetting fluid 13 to charge spray head 345. The filled state of cylinder 321, 323 can be determined with a position sensor (not shown) which detects the position of piston 325, 327 and relays that information to PLC 281. Opening of air-supply valve 289 to supply pressurized air to one of one of air supply/exhaust line 317 or 319 closes supply of pressurized air to the other supply/exhaust line 317 or 319 and opens that closed line to vent 295 (EA) for first circuit 291 or vent 296 (EB) for second circuit 293 to equalize pressure therein with ambient air pressure.

Referring first to FIG. 9, PLC 281 is shown controlling wetting fluid applicator unit 210 to charge spray head 345 through first circuit 291. In this arrangement, PLC 281 controls solenoid 285 to operate air-supply valve 289 to direct pressurized air from air source 283 to air supply/exhaust line 317 of first circuit 291 via charging port 292. Pressurized air delivered through air supply/exhaust line 317 of first circuit 291 applies a force sufficient to advance piston 325 in the direction of advancement arrow 359 against spring 329. Advancement of piston 325 displaces wetting fluid 13 toward spray head 345 through fluid delivery line 337 because check valve 297 is closed by seating of ball 311 urged by spring 313 against seat 309. Simultaneously, increased fluid pressure in fluid delivery line 337 from advancement of piston 325 opens check valve 299 by displacing ball 311 from seat 309 against spring 313 allowing fluid flow therethrough and to manifold 343 and spray head 345. Fluid pressure may be shown on gauge 347.

Referring further to FIG. 9, PLC 281 controls solenoid 287 to open air-supply valve 289 so that air supply and exhaust line 319 for second circuit 293 is open to vent 296 to allow air pressure in air supply and exhaust line 319 to equalize with ambient air pressure. Equalization of air pressure within air supply/exhaust line 319 removes any force provided by air pressure against piston 327, thereby causing spring 331 to retract piston 327 in the direction of retraction arrow 361 to the retracted position shown in FIG. 9. Retraction of piston 327 creates a vacuum (i.e., a negative pressure) which draws and inducts wetting fluid 13 from reservoir 315 into fluid supply line 337 through check valve 301 and into fluid delivery line 341 causing cylinder 323 to fill with wetting fluid 13. It is possible for wetting fluid 13 from reservoir 315 to flow to cylinder 323 because fluid pressure opens check valve 301 by displacing ball 311 from seat 309 against spring 313. Simultaneously, the vacuum created by retraction of piston 327 reduces pressure acting on check valve 303 causing spring 313 to urge ball 311 against seat 309 closing valve 303 blocking flow of wetting fluid therethrough.

The process illustrated in FIG. 9 continues until piston 325 of first circuit 291 is fully or near-fully advanced in the direction of arrow 359 and piston 327 of second circuit 293 is fully or near-fully retracted in the direction of arrow 361. The position of one or both pistons 325, 327 may be detected by one or more position sensor (not shown) which communicate(s) that positional information to PLC 281. Full advancement of piston 325 and full retraction of piston 327 would signal to PLC 281 that first circuit 291 is exhausted of wetting fluid 13 and that second circuit 293 is replenished with wetting fluid 13.

Referring now to FIG. 10, the charging and replenishing process is reversed as compared with FIG. 9. PLC 281 detects the advanced position of piston 325 of first circuit 291 and retracted position of piston 327 of second circuit 293 as previously described. PLC 281 controls solenoid 287 to open air-supply valve 289 to deliver pressurized air at about 70 to about 90 psi from air source 283 to air supply/exhaust line 319 of second circuit 293 and controls solenoid 285 to open air supply/exhaust line 317 of first circuit 291 to vent 295. Pressurized air delivered through air supply/exhaust line 319 of second circuit 293 now applies a force sufficient to advance piston 327 in the direction of advancement arrow 359 against spring 331. Advancement of piston 327 displaces wetting fluid 13 toward spray head 345 through fluid delivery line 341 because check valve 301 is closed and check valve 303 is open responsive to the increase in fluid pressure within fluid delivery line 341. Wetting fluid 13 charges spray head 345.

While wetting fluid 13 from second circuit 293 is delivered to manifold 343 to charge spray head 345, PLC 281 simultaneously controls replenishment of first circuit 291 with wetting fluid 13 in the following manner. PLC 281 controls solenoid 285 to open air-supply valve 289 so that air supply and exhaust line 317 of first circuit 291 is open to vent 295 allowing air pressure in air supply and exhaust line 317 to equalize with ambient air pressure removing any force against piston 325, thereby causing spring 329 to retract piston 325 in the direction of retraction arrow 361 to the position shown in FIG. 10. Retraction of piston 325 creates a vacuum (i.e., a negative pressure) in cylinder 321 of first circuit 291 which draws and inducts wetting fluid 13 into cylinder 321 to fill cylinder 321 with wetting fluid 13. It is possible for wetting fluid 13 from reservoir 315 to flow to cylinder 321 of first circuit 291 because check valve 297 is open while check valve 299 is closed due to the drop in fluid pressure within fluid delivery line 337 as piston 325 retracts.

The charging and replenishment process alternating between first and second circuits 291, 293 described in connection with FIGS. 9 and 10 is repeated until the packaging machine 211 is intentionally stopped or until wetting fluid 13 in reservoir 315 is depleted sending a signal to PLC 281 to stop operation of packaging machine 211.

In the examples, wetting fluid 13 delivered from either first or second circuits 291, 293 charges spray head 345 to dispense an adjustable volumetric amount of wetting fluid 13 through a nozzle 363 of spray head 345. A spray head 345 of the EFD type may include a valve (not shown) which opens and closes responsive to a signal from controller 281 to spray an amount of wetting fluid 13 onto valve 11. In certain applications, wetting fluid applicator 210 can be capable of running up to 400 shots of a defined wetting fluid 13 dose per minute through spray head 345. In the examples, wetting fluid applicator 210 applies wetting fluid 13 to pressure relief valves 11 on release liner 215 through release liner 215 opening 221 and valve vent 219 after the web of release liner 215 is unwound from unwinder 241 and before each valve 11 arrives at peeler bar assembly 259. Intermittent operation of rollers 255, 257 positions each pressure relief valve 11 one-after-the-other with pressure relief valve 11 vent 219 and opening 221 in release liner 215 aligned with nozzle 363 for application of wetting fluid 13 within valve 11. By way of example only, PLC 281 controls the amount of wetting fluid 13 dispensed through nozzle 363 into each pressure relief valve 11 in an amount which may be in the range of about 0.1 µg to about 5 µg. The amount of wetting fluid may be increased or decreased based on the needs of the packager.

A pair of optical, photoelectric eye sensors 365, 367 may optionally be positioned equal distances along web of release liner 215 before and after nozzle 363. A leading sensor 367 may detect the leading edge of a pressure relief valve 11 and a following sensor 365 may detect the trailing edge of the pressure relief valve 11 to position pressure relief valve 11 vent 219 and opening 221 in release liner 215 aligned with nozzle 363 for application of wetting fluid 13 within valve 11. Such leading 367 and trailing 365 sensors provide feedback, through appropriate software, to PLC 281 and rollers 255, 257 to assist in proper positioning of pressure relief valves 11 across from nozzle 363 for application of wetting fluid 13 to each valve 11.

It will be apparent to the reader that wetting fluid applicators 210 of the types described herein provide important advantages over predecessor wetting fluid applicator units. Wetting fluid applicators 210 of the types described herein may be refilled and replenished with wetting fluid during continuous operation of a packaging machine 211 and without having to first stop operation of the packaging machine 211. Consequently, the inventive wetting fluid applicators 210 avoid costly and time-consuming interruption of the packaging process performed by packaging machine 211.

This contrasts with Nordson-type systems 110 which require that the packaging machine 211 be stopped to inspect the level of wetting fluid 13 or replenish wetting fluid in the pressurized reservoir 111. Stoppage of the packaging machine 211 is required because the Nordson reservoir must be depressurized before removing lid 113 and this process interrupts wetting fluid flow to packaging machine 211. And, stoppage of packaging machine 211 can occur more frequently because Nordson-type systems 110 do not permit the operator to view the level of wetting fluid 13 within reservoir 111 given the opaque lid 113 and sidewalls 119 necessitating packaging machine 211 shut down simply to inspect the volumetric amount of wetting fluid within reservoir 111.

Wetting fluid applicators 210 of the types described herein are robust and effective at displacing higher viscosity wetting fluids preferentially used with one-way pressure relief valves for application to coffee packages. Wetting fluid applicators 210 are capable of running up to 400 shots of a defined wetting fluid 13 dose per minute. As a corollary, wetting fluid applicators 210 of the types described herein function reliably over many valve-application cycles thereby avoiding costly mechanical failures which have been demonstrated to occur when electro-mechanical gear driven pump systems are used to displace high viscosity wetting fluids. This reliability is due at least in part to recognition that use of air power to advance pistons 325, 327 is a more effective and reliable means of creating fluid pressure than is a gear-driven pump (e.g. pump 23).

Wetting fluid applicators 210 of the types described herein are capable of being retrofit into any fluid transfer system in the field. Many types of repairs required for wetting fluid applicators 210 of the types described herein can be accomplished by simple replacement of components such as hoses, gaskets, and seals.

Wetting fluid applicator 210 may be used in a system such as that illustrated in FIGS. 4-10 or in other systems comprising versions or modifications of the basic components of a base unit, an unwinder, a rewinder, rollers, electronic components, pneumatic components, and a valve applicator unit, other than those that have been shown and described. Solely as an example, the present invention has been discussed in the context of coffee packaging, although it can be readily used for the packing of other food and non-edible products.

The foregoing description is provided for the purpose of explanation and is not to be construed as limiting the invention. While the invention has been described with reference to preferred embodiments or preferred methods, it is to be understood that the words which have been used herein are words of description and illustration, rather than words of limitation. Section headings are non-limiting and are provided for the reader's convenience only. Furthermore, although the invention has been described herein with reference to particular structure, methods, and embodiments, the invention is not intended to be limited to the particulars disclosed herein, as the invention extends to all structures, methods and uses that are within the scope of the appended claims. The disclosed wetting fluid applicator and method of applying wetting fluid to a pressure relief valve may address some or all of the problems previously described. A particular embodiment need not address all of the problems described. The disclosed wetting fluid applicator and method of applying wetting fluid to a pressure relief valve should not be limited to embodiments comprising solutions to all of these problems. Further, several advantages have been described that flow from the structure and methods; the present invention is not limited to structure and methods that encompass any or all of these advantages. Furthermore, any features of one described embodiment can be applicable to the other embodiments described herein.

## Claims

1. A wetting fluid applicator (210) for applying wetting fluid (13) within a generally planar pressure relief valve (11) prior to application of the valve (11) to a package, the applicator comprising:
• a controller (281);
• a spray head (345) controlled by the controller (281) for delivering wetting fluid (13) to each valve (11);
• an unpressurized wetting fluid reservoir (315) in fluid communication with the spray head (345) through a first fluid supply circuit (291) and, alternatively, a second fluid supply circuit (293);
• an air-supply valve (289) controlled by the controller (281) to deliver pressurized air to the first fluid supply circuit (291) and, alternatively, to the second fluid supply circuit (293) and to vent air from the unpressurized circuit; and
• each of the first and second fluid supply circuits (291, 293) includes:
∘ a cylinder (321, 323) operatively connected to the air-supply valve (289);
∘ an air-driven piston (325, 327) in the cylinder (321, 323) which advances to provide fluid pressure charging the spray head (345) with wetting fluid (13) and which retracts to create negative fluid pressure replenishing the cylinder (321, 323) with wetting fluid (13);
∘ a fluid supply line (337) in one-way fluid flow connection from the reservoir (315) to each fluid supply circuit (291, 293) and cylinder (321, 323); and
∘ a fluid delivery line (337) in one-way fluid flow connection from the cylinder (321, 323) to the spray head (345),
whereby, an increase in air pressure in one fluid supply circuit (291, 293) charges the spray head (345) while simultaneous release of air pressure in the other fluid supply circuit (291, 293) replenishes that circuit with wetting fluid (13) from the reservoir (315).

2. The wetting fluid applicator (210) of claim 1 wherein the spray head (345) delivers a quantity of pressurized wetting fluid (13) responsive to a signal from the controller (281).

3. The wetting fluid applicator (210) of claim 1 wherein each piston (325, 327) is advanced by air pressure from the air-supply valve (289) and is biased to a retracted position upon loss of the air pressure.

4. The wetting fluid applicator (210) of claim 3 further including a spring which biases the piston (325, 327) to the retracted position.

5. The wetting fluid applicator (210) of claim 1 wherein:
• each fluid supply circuit (291, 293) includes a first one-way valve (297, 301) between the reservoir (315) and the fluid supply line (333) and a second one-way valve (299, 303) between the cylinder (321, 323) and the spray head (345), the first and second one-way valves (297, 299, 301 ,303) restricting fluid flow in an opposite direction; and
• a piston-driven increase in fluid pressure in one circuit (291, 293) opens the second valve (299, 303) with the first valve (297, 301) closed to deliver wetting fluid (13) to the spray head (345) while simultaneous piston-driven negative pressure in the other circuit (291, 303) opens the first valve (297, 301) with the second valve (299, 303) closed to induct wetting fluid (13) into the cylinder (321, 323).

6. The wetting fluid applicator (210) of claim 5 wherein each one-way valve is a check valve (297, 299, 301, 303).

7. The wetting fluid applicator (210) of claim 6 wherein each check valve (297, 299, 301, 303) includes an inlet (305) and outlet (307) and a gate (311) biased against the inlet (305).

8. The wetting fluid applicator (210) of claim 1 wherein the air-supply valve (289) further includes a first solenoid (285) operatively connected to the controller (281) which operates the air-supply valve (289) to deliver pressurized air to one fluid supply circuit (291) and a second solenoid (287) operatively connected to the controller (281) which operates the air-supply valve (289) to vent air from the other circuit (293).

9. The wetting fluid applicator (210) of claim 1 wherein the unpressurized wetting fluid reservoir (315) is replenished with wetting fluid (13) during operation of the wetting fluid applicator (210).

10. The wetting fluid applicator (210) of claim 9 wherein the unpressurized wetting fluid reservoir (315) includes a lid (316) which may be removed to visually check an amount of wetting fluid (13) in the reservoir (315) during operation of the wetting fluid applicator (210).

## Patentansprüche

1. Befeuchtungsflüssigkeitsapplikator (210) zum Aufbringen von Befeuchtungsflüssigkeit (13) innerhalb eines im Wesentlichen planen Druckentlastungsventils (11) vor dem Anbringen des Ventils (11) an einer Verpackung, wobei der Applikator aufweist:
• eine Steuereinheit (281);
• einen Sprühkopf (345), der durch die Steuereinheit (281) gesteuert ist, zum Zuführen von Befeuchtungsflüssigkeit (13) zu jedem Ventil (11);
• einen nicht unter Druck stehenden Befeuchtungsflüssigkeitsbehälter (315), der über einen ersten Flüssigkeitsversorgungskreis (291) und alternativ einen zweiten Flüssigkeitsversorgungskreis (293) fluidisch mit dem Sprühkopf (345) verbunden ist;
• ein Luftzufuhrventil (289), das durch die Steuereinheit (281) gesteuert ist, um Druckluft an den ersten Flüssigkeitsversorgungskreis (291) und alternativ an den zweiten Flüssigkeitsversorgungskreis (293) zuzuführen und Luft aus dem nicht unter Druck stehenden Kreis abzuführen; und
• wobei jeder der ersten und zweiten Flüssigkeitsversorgungskreise (291, 293) Folgendes aufweist:
o einen Zylinder (321, 323), der betriebswirksam mit dem Luftzufuhrventil (289) verbunden ist;
o einen luftbetriebenen Kolben (325, 327) im Zylinder (321, 323), der sich vorwärts bewegt, um Fluiddruck bereitzustellen, der den Sprühkopf (345) mit Befeuchtungsflüssigkeit (13) lädt, und der sich zurückzieht, um einen negativen Fluiddruck zu erzeugen, der den Zylinder (321, 323) mit Befeuchtungsflüssigkeit (13) nachfüllt;
o eine Flüssigkeitszufuhrleitung (337) in Einwegfluidströmungsverbindung vom Behälter (315) zu jedem Flüssigkeitsversorgungskreis (291, 293) und Zylinder (321, 323); und
o eine Flüssigkeitsausgabeleitung (337) in Einwegfluidströmungsverbindung vom Zylinder (321, 323) zum Sprühkopf (345),
wobei eine Erhöhung des Luftdrucks in einem Flüssigkeitsversorgungskreis (291, 293) den Sprühkopf (345) lädt, während gleichzeitiges Ablassen des Luftdrucks im anderen Flüssigkeitsversorgungskreis (291, 293) diesen Kreis mit Befeuchtungsflüssigkeit (13) aus dem Behälter (315) nachfüllt.

2. Befeuchtungsflüssigkeitsapplikator (210) nach Anspruch 1, wobei der Sprühkopf (345) eine Menge von unter Druck stehender Befeuchtungsflüssigkeit (13) in Reaktion auf ein Signal von der Steuereinheit (281) zuführt.

3. Befeuchtungsflüssigkeitsapplikator (210) nach Anspruch 1, wobei jeder Kolben (325, 327) durch Luftdruck vom Luftzufuhrventil (289) vorwärts bewegt wird und bei Verlust des Luftdrucks in eine zurückgezogene Position vorgespannt ist.

4. Befeuchtungsflüssigkeitsapplikator (210) nach Anspruch 3, der des Weiteren eine Feder umfasst, die den Kolben (325, 327) in die zurückgezogene Position vorspannt.

5. Befeuchtungsflüssigkeitsapplikator (210) nach Anspruch 1, wobei:
• jeder Flüssigkeitsversorgungskreis (291, 293) ein erstes Einwegventil (297, 301) zwischen dem Behälter (315) und der Flüssigkeitszufuhrleitung (333) und ein zweites Einwegventil (299, 303) zwischen dem Zylinder (321, 323) und dem Sprühkopf (345) aufweist, wobei die ersten und zweiten Einwegventile (297, 299, 301, 303) den Flüssigkeitsfluss in entgegengesetzter Richtung beschränken; und
• eine kolbenbetriebene Erhöhung des Fluiddrucks in einem Kreis (291, 293) das zweite Ventil (299, 303) öffnet, wobei das erste Ventil (297, 301) geschlossen ist, um Befeuchtungsflüssigkeit (13) zum Sprühkopf (345) zuzuführen, während gleichzeitiger kolbenbetriebener Unterdruck im anderen Kreis (291, 303) das erste Ventil (297, 301) öffnet, wobei das zweite Ventil (299, 303) geschlossen ist, um Befeuchtungsflüssigkeit (13) in den Zylinder (321, 323) einzusaugen.

6. Befeuchtungsflüssigkeitsapplikator (210) nach Anspruch 5, wobei jedes Einwegventil ein Rückschlagventil (297, 299, 301, 303) ist.

7. Befeuchtungsflüssigkeitsapplikator (210) nach Anspruch 6, wobei jedes Rückschlagventil (297, 299, 301, 303) einen Einlass (305) und einen Auslass (307) und ein Verschlusselement (311) aufweist, das gegen den Einlass (305) vorgespannt ist.

8. Befeuchtungsflüssigkeitsapplikator (210) nach Anspruch 1, wobei das Luftzufuhrventil (289) des Weiteren ein erstes Solenoid (285) umfasst, das betriebswirksam mit der Steuereinheit (281) verbunden ist und das Luftzufuhrventil (289) zum Zuführen von Druckluft an einen Flüssigkeitsversorgungskreis (291) betreibt, und ein zweites Solenoid (287), das betriebswirksam mit der Steuereinheit (281) verbunden ist und das Luftzufuhrventil (289) zum Abführen von Luft aus dem anderen Kreis (293) betreibt.

9. Befeuchtungsflüssigkeitsapplikator (210) nach Anspruch 1, wobei der nicht unter Druck stehende Befeuchtungsflüssigkeitsbehälter (315) während des Betriebs des Befeuchtungsflüssigkeitsapplikators (210) mit Befeuchtungsflüssigkeit (13) nachgefüllt wird.

10. Befeuchtungsflüssigkeitsapplikator (210) nach Anspruch 9, wobei der nicht unter Druck stehende Befeuchtungsflüssigkeitsbehälter (315) einen Deckel (316) aufweist, der abgenommen werden kann, um eine Menge von Befeuchtungsflüssigkeit (13) im Behälter (315) während des Betriebs des Befeuchtungsflüssigkeitsapplikators (210) visuell zu überprüfen.

## Revendications

1. Applicateur de fluide mouillant (210) destiné à appliquer un fluide mouillant (13) à l'intérieur d'une soupape de surpression globalement plane (11) avant l'application de la soupape (11) sur un emballage, l'applicateur comprenant :
• un contrôleur (281) ;
• une tête de pulvérisation (345) commandée par le contrôleur (281) pour délivrer du fluide mouillant (13) à chaque soupape (11) ;
• un réservoir de fluide mouillant non pressurisé (315) en communication fluidique avec la tête de pulvérisation (345) par l'intermédiaire d'un premier circuit d'alimentation en fluide (291) et, alternativement, d'un second circuit d'alimentation en fluide (293) ;
• une soupape d'alimentation en air (289) commandée par le contrôleur (281) pour fournir de l'air comprimé au premier circuit d'alimentation en fluide (291) et, alternativement, au second circuit d'alimentation en fluide (293) et pour évacuer l'air du circuit non pressurisé ; et
• chacun des premier et second circuits d'alimentation en fluide (291, 293) comprend :
o un cylindre (321, 323) fonctionnellement relié à la soupape d'alimentation en air (289) ;
o un piston pneumatique (325, 327) dans le cylindre (321, 323) qui avance pour fournir une pression de fluide chargeant la tête de pulvérisation (345) de fluide mouillant (13) et qui se rétracte pour créer une pression de fluide négative remplissant le cylindre (321, 323) de fluide mouillant (13) ;
o une conduite d'alimentation en fluide (337) en liaison unidirectionnelle entre le réservoir (315) et chaque circuit d'alimentation en fluide (291, 293) et cylindre (321, 323) ; et
o une conduite de distribution de fluide (337) en liaison unidirectionnelle entre le cylindre (321, 323) et la tête de pulvérisation (345),
une augmentation de la pression d'air dans un circuit d'alimentation en fluide (291, 293) chargeant ainsi la tête de pulvérisation (345) tandis que le relâchement simultané de la pression d'air dans l'autre circuit d'alimentation en fluide (291, 293) remplit ce circuit de fluide mouillant (13) provenant du réservoir (315).

2. Applicateur de fluide mouillant (210) selon la revendication 1, dans lequel la tête de pulvérisation (345) délivre une quantité de fluide mouillant sous pression (13) en réponse à un signal provenant du contrôleur (281).

3. Applicateur de fluide mouillant (210) selon la revendication 1, dans lequel chaque piston (325, 327) est avancé par la pression d'air provenant de la soupape d'alimentation en air (289) et est sollicité vers une position rétractée lors de la perte de la pression d'air.

4. Applicateur de fluide mouillant (210) selon la revendication 3, comprenant en outre un ressort qui sollicite le piston (325, 327) vers la position rétractée.

5. Applicateur de fluide mouillant (210) selon la revendication 1, dans lequel :
• chaque circuit d'alimentation en fluide (291, 293) comprend un premier clapet anti-retour (297, 301) entre le réservoir (315) et la conduite d'alimentation en fluide (333) et un second clapet anti-retour (299, 303) entre le cylindre (321, 323) et la tête de pulvérisation (345), les premier et second clapets anti-retour (297, 299, 301, 303) restreignant l'écoulement de fluide dans une direction opposée ; et
• une augmentation de pression de fluide commandée par piston dans un circuit (291, 293) ouvre la seconde soupape (299, 303), la première soupape (297, 301) étant fermée pour délivrer le fluide mouillant (13) à la tête de pulvérisation (345), tandis que la pression négative entraînée simultanément par piston dans l'autre circuit (291, 303) ouvre la première soupape (297, 301), la seconde soupape (299, 303) étant fermée, pour faire entrer le fluide mouillant (13) dans le cylindre (321, 323).

6. Applicateur de fluide mouillant (210) selon la revendication 5, dans lequel chaque soupape unidirectionnelle est un clapet anti-retour (297, 299, 301, 303).

7. Applicateur de fluide mouillant (210) selon la revendication 6, dans lequel chaque clapet anti-retour (297, 299, 301, 303) comprend une entrée (305) et une sortie (307) et une porte (311) sollicitée contre l'entrée (305).

8. Applicateur de fluide mouillant (210) selon la revendication 1, dans lequel la soupape d'alimentation en air (289) comprend en outre un premier solénoïde (285) connecté de manière opérationnelle au contrôleur (281) qui actionne la soupape d'alimentation en air (289) pour délivrer de l'air comprimé à un circuit d'alimentation en fluide (291) et un second solénoïde (287) connecté de manière fonctionnelle au contrôleur (281) qui actionne la soupape d'alimentation en air (289) pour évacuer l'air de l'autre circuit (293).

9. Applicateur de fluide mouillant (210) selon la revendication 1, dans lequel le réservoir de fluide mouillant non pressurisé (315) est rempli de fluide mouillant (13) pendant le fonctionnement de l'applicateur de fluide mouillant (210).

10. Applicateur de fluide mouillant (210) selon la revendication 9, dans lequel le réservoir de fluide mouillant non pressurisé (315) comprend un couvercle (316) qui peut être retiré pour vérifier visuellement une quantité de fluide mouillant (13) dans le réservoir (315) pendant le fonctionnement de l'applicateur de fluide mouillant (210).
